# EUROPÄISCHE PATENTSCHRIFT

(11) **EP 1 627 090 B1**
(45) Veröffentlichungstag und Bekanntmachung des Hinweises auf die Patenterteilung: **25.10.2006**
(21) Anmeldenummer: 04763227.8
(22) Anmeldetag: 15.07.2004
(51) Int. Cl.: C22C 16/00

(54) **ZIRKONIUMLEGIERUNG UND BAUTEILE FÜR DEN KERN VON LEICHTWASSERGEKÜHLTEN KERNREAKTOREN**
ZIRCONIUM ALLOY AND COMPONENTS FOR THE CORE OF LIGHT WATER COOLED NUCLEAR REACTORS
ALLIAGE AU ZIRCONIUM ET COMPOSANTS POUR LE COEUR DE REACTEURS NUCLEAIRES REFROIDIS A L'EAU LEGERE

(30) Priorität: 16.07.2003 DE 10332239
(43) Veröffentlichungstag der Anmeldung: 22.02.2006
(73) Patentinhaber: AREVA NP GmbH, 91058 Erlangen (DE)
(72) Erfinder: GARZAROLLI, Friedrich, 91315 Höchstadt/Aisch (DE); SEIBOLD, Angelika, 90765 Fürth (DE); RUHMANN, Heinrich, 91056 Erlangen (DE)
(74) Vertreter: Mörtel & Höfner
(86) Internationale Anmeldenummer: PCT/EP2004/007822
(87) Internationale Veröffentlichungsnummer: WO 2005/007908

(56) Entgegenhaltungen:
- EP-A- 0 415 134
- WO-A-00/65117
- WO-A-01/24193
- US-A- 4 938 920
- US-A- 5 940 464
- "Annual Book of ASTM Standards, Section 2, Volume 02.04" 31. Dezember 2001 (2001-12-31), ASTM , XP002309830 Seite 213 - Seite 214; Tabelle 1

## Beschreibung

Die Erfindung betrifft eine Zirkoniumlegierung und aus einer solchen Legierung gefertigte Strukturteile für den Kern von leichtwassergekühlten Kernreaktoren, insbesondere von Druckwasserreaktoren. Derartige Strukturteile sind vor allem Brennstoffhüllrohre, Abstandhalter und Steuerstabführungsrohre.

Aus physikalischen Gründen wird für Strukturteile in Reaktorkernen als Basismetall Zirkonium verwendet, das eine geringe Neutronenabsorption besitzt. Wegen der Abtrennung des Neutronenabsorbers Hafnium benutzt man dabei in aller Regel reaktorreinen Zirkoniumschwamm, dessen Zusammensetzung genormt ist.

Für den genannten Zweck werden heute meist Zircaloy-2 (für Siedewasserreaktoren) und Zircaloy-4 (für Druckwasserreaktoren) oder davon abweichende, beispielsweise aus US 5,940,464, DE 38 05 124 A1, DE 690 10 115 T2 und WO 01/24193 A1 bekannte Legierungen auf Zirkoniumbasis verwendet. In geringerem Ausmaß kommen auch binäre Zr-Nb-Legierungen zum Einsatz.

In der folgenden Tabelle sind die Zusammensetzungen von Zirkoniumschwamm und der in der westlichen Technik bisher üblichen, genormten Legierungen angegeben. Dabei ist zu erwähnen, dass heute einige der zugelassenen Verunreinigungen besonders kontrolliert oder sogar durch entsprechende Zusätze auf spezielle Werte eingestellt werden. Z.B. wurde Sauerstoff wegen seiner härtenden Wirkung auf Zirkonium ursprünglich nur entsprechend den Bedürfnissen der Fertigung kontrolliert, jetzt aber gelegentlich bewusst als härtender Zusatz eingesetzt.

**Tabelle**

| Reaktorreines Zirkonium (Maximalgehalte in ppm) : | | | | | | | | | | |
|---|---|---|---|---|---|---|---|---|---|---|
| Al | B | Cd | C | Cl | H | Hf | Fe | 0 | Si | |
| 75 | 0.5 | 0,5 | 250 | 1300 | 25 | 100 | 1500 | 1600 | 20 | |

| Zusammensetzung von Zircaloy- und ZrNb-Legierungen (in Massen%) : | | | | | | | | | | |
|---|---|---|---|---|---|---|---|---|---|---|
| | Sn | | Fe | | Cr | | Ni | | sonstige | Vorgabe |
| Zircaloy-2: | 1,2-1,7 | | 0,07-,020 | | 0,05-0,15 | | 0,03-0,08 | | 0,18-0,36 | FeCrNi |
| Zircaloy-4: | 1,2-1,7 | | 0,18-0,24 | | 0,07-0,13 | | ≤0,007 | | 2,40-2,80% | FeCr |
| Zr-2,5%Nb: | ≤0,05 | | ≤0,150 | | ≤0,02 | | ≤0,007 | | 2,40-2,80% | Nb |

Aufgabe der Erfindung ist es, eine weitere Zirkoniumlegierung und daraus hergestellte Strukturteile für den Kern von Leichwasserreaktoren vorzuschlagen.

Diese Aufgabe wird nach den Ansprüchen 1 und 5 gelöst. Die gem. Anspruch 1 vorgeschlagene Legierung setzt sich aus Matrix aus reaktorreinem Zirkonium und 0,2 bis 0,5 % Sn, 0,2 bis 0,5 % Nb, 0,05 bis 0,40 % Fe und 0 bis 0,20 % V zusammen, wobei der Kohlenstoffgehalt auf maximal 120 ppm begrenzt, für Si ein Bereich von 80 bis 120 ppm und für O ein Bereich von 0,12 bis 0,20 % eingehalten ist. Es hat sich gezeigt, dass sich mit derartigen Legierungen Bauteile, z.B. Hüllrohre, Abstandhalter, Führungsrohre und weitere Strukturelemente eines Brennelements, für den Kern von Leichtwasserreaktoren, insbesondere von Druckwasserreaktoren herstellen lassen, die gegenüber Bauteilen aus Zircaloy-4 - bei im wesentlichen gleicher Herstellung und vergleichbarer Wärmebehandlung - eine verbesserte Korrosionsbeständigkeit aufweisen. Diese Eigenschaft ist dann besonders stark ausgeprägt, wenn die Summe der Legierungsbestandteile Sn, Nb, Fe und V einen Wert von etwa 1,3 % nicht überschreitet. Das bedeutet, dass die Anteile von Sn und Nb nicht völlig frei wählbar sind. Um optimale Ergebnisse hinsichtlich des Korrosionsverhaltens zu erreichen muss vielmehr der Anteil des Übergangsmetalls Fe bzw. der Übergangsmetalle Fe und V sinken, wenn der Gesamtanteil an Sn und Nb steigt.

Größere Werte als 0,5 % Sn, etwa bis 0,75 % verschlechtern die Korrosionsfestigkeit, erhöhen das strahleninduzierte Wachstum, wobei sich die mechanischen Eigenschaften deutlich verbessern, so dass der vorgeschlagene Wert von 0,5 % max. einen guten Kompromiss darstellt. Der minimale Sn-Gehalt, mit dem Bauteile mit noch guten mechanischen Eigenschaften herstellbar sind liegt bei 0,2 %.

Vanadium ist ein hinsichtlich Korrosionsverbesserung nicht unbedingt erforderlicher Zusatz. So kann mit Sn-Gehalten von 0,4 % bis 0,5 % eine Steigerung der Korrosionsfestigkeit bei hohem Abbrand erreicht werden. Wird jedoch ein Teil des Eisens durch V ersetzt bzw. V in geringen Mengen (0,02 bis 0,20 %) zulegiert, so wird die Wasserstoffaufnahme (HPUF = hydrogen pickup factor) und dadurch die Bildung von Hydriden, die neben einer Materialversprödung auch ein Materialwachstum bewirken, verringert.

Um eine optimale Kriechfestigkeit und gleichzeitig eine Streckgrenze mit einem hohen Wert zu erzielen, kann Nb bis 0,8 %, vorzugsweise bis an seine Löslichkeitsgrenze, also bis 0,5 % zulegiert werden. Wenn diese Grenze nicht wesentlich überschritten wird, sind unkontrollierte Phasenübergänge, die sich aufgrund der komplizierten Phasendiagramme von ZrNb bei höheren Temperaturen, z.B. beim Verschweißen von Abstandhaltern oder von Hüllrohren mit ihren Endstopfen ergeben, nicht zu befürchten. Es dürfte daher nicht erforderlich sein, die erfindungsgemäße Legierung nach einem Schweißen noch thermisch nachzubehandeln.

Weiterhin sind die Legierungen relativ unempfindlich gegenüber den Auswirkungen hoher Heizflächenbelastungen und lokaler Siedevorgänge an der Grenzfläche zu Wasser. Vor allem ist dabei eine geringe Aufnahme von Lithium und eine geringe nodulare Korrosion - wie bei Hüllrohren aus Zirkaloy-4 unter üblichen Druckwasser-Bedingungen - zu beobachten. Außerdem zeigen sie ein geringes strahleninduziertes Wachstum.

**Ausführungsbeispiele:**

| | Sn (%) | Nb (%) | Fe (%) | V (%) | O (%) | Si (ppm) | C ppm) |
|---|---|---|---|---|---|---|---|
| A | 0,30 | 0,25 | 0,35 | 0,16 | 0,14 | 110 | 100 |
| B | 0,30 | 0,45 | 0,15 | 0,10 | 0,14 | 110 | 100 |
| C | 0,40 | 0,45 | 0,10 | 0,07 | 0,14 | 110 | 100 |
| D | 0,30 | 0,75 | 0,13 | 0,07 | 0,14 | 110 | 100 |

Rest: Jeweils reaktorreines unlegiertes Zirkonium mit zugelassenen Fremdstoffen bzw. Verunreinigungen.

Zur Herstellung von Hüllrohren werden Ingots aus den Legierungen A bis D im Vakuum in mehreren Umschmelzschritten erschmolzen und im β-Bereich der Legierungen unterhalb der Schmelztemperatur geschmiedet. Die Schmiedestück werden erneut auf eine Temperatur im β-Bereich aufgeheizt und anschließend in einem Wasserbad mit einer Abkühlrate von mindestens 30 K/s abgeschreckt. Dann werden die Schmiedestücke zu Stangen geschmiedet.

Die Schmiedestangen werden mechanisch bearbeitet und in Teile geschnitten, aus denen Rohre extrudiert werden. Um ein vollrekristallisiertes Gefüge zu erhalten, wird nach der Extrusion eine Glühung durchgeführt. Die so behandelten Rohre werden in mehreren Stufen durch Kaltverformung zu Hüllrohren gepilgert. Vor jeder Verformung findet unter Vakuum eine Zwischenglühung bei Temperaturen von etwa 700°C statt, die eine Erholung und Rekristallisation bewirkt. Auf die letzte, zum endgültigen Querschnitt des Hüllrohres führende Verformung folgt,eine Abschlussglühung bei etwa 600°C. Dadurch wird für den vorgesehenen Reaktoreinsatz eine niedrige Kriechverformung bei hoher Streck-Grenze eingestellt. Bei der Herstellung wird ein kumulierter Glühparameter im Bereich A = 10-40 E-18 h eingehalten. Dazu kann optional z.B. nach dem Herstellen der Schmiedestangen eine Glühung im alpha-Bereich ausgeführt werden.

Die auf die geschilderte Weise gefertigten Hüllrohre werden abschließend mit Brennstoff-Tabletten gefüllt und an beiden Enden gasdicht mit Endstopfen verschweißt. Damit ist die Fertigung der Brennstäbe abgeschlossen. Nach dem gleichen Verfahren werden auch Steuerstabführungsrohre hergestellt.

Aus einem Ingot der gleichen Zusammensetzung wird bei einem anderen Ausführungsbeispiel nach dem entsprechenden Aufheizen und Abschrecken das Schmiedestück (einmal oder auch in mehreren Schritten mit dazwischen liegenden Glühungen) warm zu Platten gewalzt. Für die Warmverformungen und Zwischenglühungen werden die Temperaturen so gewählt, dass sie im α-Bereich der Legierungen liegen. Anschließend wird die Platte in mehreren Schritten kalt zu einem Blech der gewünschten Dicke gewalzt. Zwischen den Verformungsschritten sowie nach der letzten Verformung wird eine Vakuumglühung durchgeführt, die auch im Durchlaufverfahren erfolgen kann und eine vollständige Rekristallisierung bewirkt. Diese Bleche werden zu Abstandhaltern weiterverarbeitet.

Werden auf diese Weise hergestellte Brennstäbe, Führungsrohre und Abstandhalter in einen Druckwasserreaktor eingesetzt so zeigen diese Bauteile im Vergleich zu Bauteilen aus herkömmlichem Zircaloy-4 mit niedrigem Zinngehalt (low tin Zirc-4) bessere Korrosionswerte, insbesondere bei längerer Betriebsdauer, was sich aus empirisch gestützten Berechnungen ableiten lässt. Deren Ergebnisse sind dem untenstehenden Diagramm entnehmbar. Auf der Abszisse ist der Abbrand, auf der Ordinate die Oxidschichtdicke aufgetragen. Es ist erkennbar, dass die erfindungsgemäßen Legierungen Legierungen etwa doppelt so lang (6 Zyklen) im Reaktor verbleiben können als die herkömmliche Legierung (3 Zyklen), bevor korrosionsbedingt ein Austausch erfolgen muss. (Alle Prozentangaben in Massenprozent).

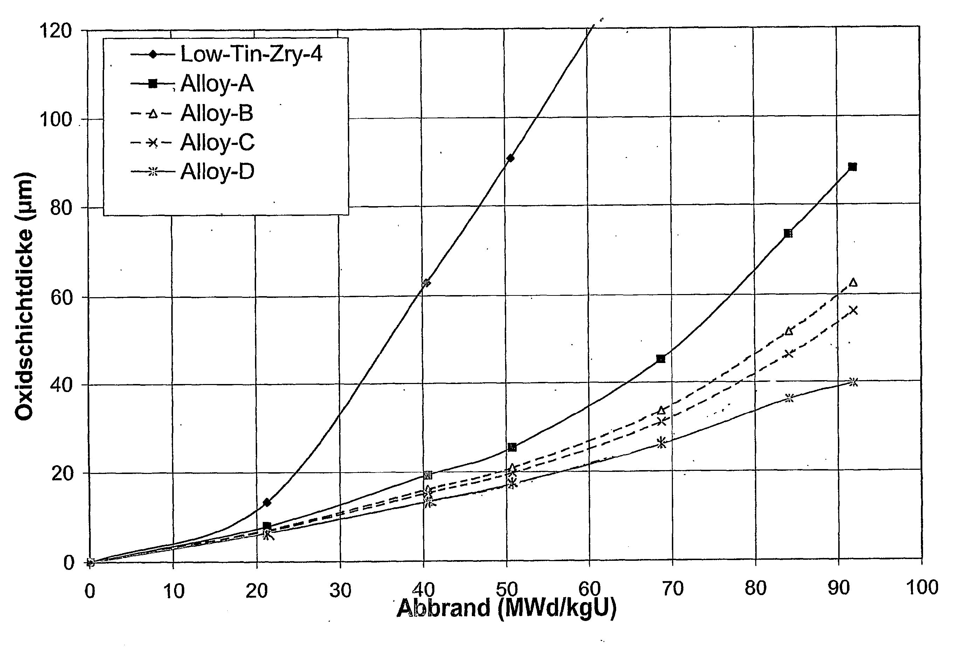

## Patentansprüche

1. Zirkoniumlegierung mit folgender Zusammensetzung (Massenprozent):
| | | |
|---|---|---|
| Sn: | 0,2 | - 0,5 % |
| Nb: | 0,2 | - 0,5 % |
| Fe: | 0,05 | - 0,40 % |
| V: | 0 | - 0,20 %, |
| O: | 0,12 | - 0,20 % |
| Si: | 80 | - 120 ppm |
| C: | | ≤ 120 ppm |
Rest: reaktorreines Zirkonium mit üblichen Verunreinigungen

2. Legierung nach Anspruch 1,
**dadurch gekennzeichnet,**
**dass** mindestens 0,07 % V enthalten ist.

3. Legierung nach Anspruche 1 oder 2,
**dadurch gekennzeichnet,**
**dass** die Summe der Anteile von Sn, Nb, Fe und V maximal 1,3 % ist.

4. Bauteil für den den Kern eines Leichtwasserreaktors, insbesondere eines Druckwasserreaktors,
**dadurch gekennzeichnet,**
**dass** es aus einer Legierung nach einem der Ansprüche 1 bis 3 gefertigt ist.

5. Bauteil nach Anspruch 4,
**dadurch gekennzeichnet,**
**dass** es unter Einhaltung eines kumulierten Glühparameters von (10-40)E-18 h hergestellt ist.

## Claims

1. Zirconium alloy having the following composition (per cent by mass):
| | |
|---|---|
| Sn: | 0.2 - 0.5% |
| Nb: | 0.2 - 0.5 % |
| Fe: | 0.05 - 0.40% |
| V: | 0 - 0.20% |
| O: | 0.12 - 0.20% |
| Si: | 80 - 120 ppm |
| C: | ≤ 120 ppm |
remainder: reactor-pure zirconium together with standard impurities.

2. Alloy according to Claim 1, **characterized in that** it contains at least 0.07% of V.

3. Alloy according to Claim 1 or 2, **characterized in that** the sum of the Sn, Nb, Fe and V contents is at most 1.3%.

4. Component for the core of a light water reactor, in particular a pressurized-water reactor, **characterized in that** it is made from the alloy according to one of Claims 1 to 3.

5. Component according to Claim 4, **characterized in that** it is produced maintaining a cumulative annealing parameter of (10 - 40)E-18 h.

## Revendications

1. Alliage de zirconium ayant la composition suivante (en pourcent en masse) :
| | |
|---|---|
| Sn : | 0,2 à 0,5 % |
| Nb : | 0,2 à 0,5 % |
| Fe : | 0,05 à 0,40 % |
| V : | 0 à 0,20 % |
| O : | 0,12 à 0,20 % |
| Si : | 80 à 120 ppm |
| C : | ≤ 120 ppm |
le reste étant du zirconium ayant une pureté pour réacteur avec des impuretés habituelles.

2. Alliage suivant la revendication 1,
**caractérisé**
**en ce qu'**il contient au moins 0,07 % de V.

3. Alliage suivant la revendication 1 ou 2,
**caractérisé en ce que** la somme des proportions de Sn, Nb, Fe et V est au maximum de 1,3 %.

4. Elément constitutif du coeur d'un réacteur à eau légère, notamment d'un réacteur à eau sous pression,
**caractérisé**
**en ce qu'**il est fabriqué en un alliage suivant l'une des revendications 1 à 3.

5. Elément constitutif suivant la revendication 4,
**caractérisé**
**en ce qu'**il est fabriqué en respectant un paramètre cumulé de recuit de (10 à 40) E-18 h.
